# EUROPEAN PATENT APPLICATION

(11) **EP 4 439 765 A1**
(43) Date of publication of application: **02.10.2024**
(21) Application number: 22898558.6
(22) Date of filing: 22.11.2022
(51) Int. Cl.: H01M 10/054, H01M 4/36, H01M 4/58, H01M 4/587, H01M 10/0565, H01M 10/0566

(54) **SODIUM ION SECONDARY BATTERY**

(30) Priority: 26.11.2021 JP 2021192328
(71) Applicant: Nippon Electric Glass Co., Ltd., Otsu-shi, Shiga 520-8639 (JP); National Institute of Advanced Industrial Science and Technology, Chiyoda-ku Tokyo 100-8921 (JP)
(72) Inventor: TSUNODA, Kei, Otsu-shi, Shiga 520-8639 (JP); TANAKA, Ayumu, Otsu-shi, Shiga 520-8639 (JP); YAMAUCHI, Hideo, Otsu-shi, Shiga 520-8639 (JP); SAKAMOTO, Taichi, Ikeda-shi, Osaka 563-8577 (JP); IKEUCHI, Yuta, Ikeda-shi, Osaka 563-8577 (JP); MUKAI, Takashi, Ikeda-shi, Osaka 563-8577 (JP); SENOH, Hiroshi, Ikeda-shi, Osaka 563-8577 (JP)
(74) Representative: Tetzner, Michael
(86) International application number: PCT/JP2022/043133
(87) International publication number: WO 2023/095775

(57) **Abstract**

Provided is a sodium-ion secondary battery having a high capacity and excellent safety. A sodium-ion secondary battery includes: a positive electrode containing a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from among Fe, Ni, Co, Mn, and Cr) ; a negative electrode containing a negative-electrode active material made of hard carbon; and a non-aqueous electrolyte.

## Description

### [Technical Field]

The present invention relates to sodium-ion secondary batteries.

### [Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of fire or explosion. Particularly, secondary batteries for power sources for electric vehicles are required to be those having high energy density and high capacity for long-distance cruising. In the meantime, secondary batteries are also required to have high safety. Therefore, there is a demand to develop a high-performance electricity storage device satisfying both high energy density and high safety.

In the current lithium-ion secondary batteries employing organic electrolytic solutions, ternary positive-electrode active materials, including an NCA (Li (Ni-Co-Al)O₂-based) active material and an NCM (Li (Ni-Co-Mn)O₂-based) active material, are used as their positive-electrode active materials. However, these positive-electrode active materials are layered oxides, are therefore thermally unstable, and, due to exothermic reaction during short circuit, may decompose while releasing oxygen and heat from their crystals, i.e., cause thermal runaway, which raises concerns about safety. To cope with this, LFP (LiFePO₄) containing P in its crystal structure is used as a positive-electrode active material having relatively high thermal stability and high safety (see, for example, Patent Literature 1).

### [Citation List]

### [Patent Literature]

[PTL 1]
JP-A-2001-110455

### [Summary of Invention]

### [Technical Problem]

Even LFP is insufficient in safety and is demanded to further improve the safety. In addition, LFP contains Li being a rare metal and, therefore, has a problem of uncertainty of stable supply thereof.

In view of the foregoing, the present invention has an object of providing a sodium-ion secondary battery having a high capacity and excellent safety.

### [Solution to Problem]

A sodium-ion secondary battery of Aspect 1 in the present invention includes: a positive electrode containing a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from among Fe, Ni, Co, Mn, and Cr); a negative electrode containing a negative-electrode active material made of hard carbon; and a non-aqueous electrolyte.

As described above, LFP containing P in its crystal structure has relatively high thermal stability. On the other hand, a positive-electrode active material made of a crystallized glass containing crystals represented by a general formula NaₓM_{y}P₂O_{z} contains a pyrophosphate backbone in the crystal, wherein a P atom and an O atom are tightly bound to oxygen. Therefore, this positive-electrode active material is a more thermally stable material than LFP. Furthermore, the surface of the positive-electrode active material made of a crystallized glass is formed of a low-electrically-conductive glass layer. Therefore, in the event of a short circuit, no abrupt reaction occurs, energy is gradually released, and the internal temperature of the battery is less likely to rise. For example, even if the battery exterior and the electrolytic solution burn when exposed to high temperatures of 600°C or higher due to fire or others, the glass layer on the surface of the positive-electrode active material melts into an insulating glass melt, which can prevent thermal runaway due to battery reaction.

Moreover, the positive-electrode active material containing pyrophosphoric acid is operable at a high voltage and can make up a safe and high-energy-density battery in combination with hard carbon operable at an extremely low potential and a high capacity as a negative-electrode active material. In addition, Na ions rich as a resource are used as a carrier and, therefore, can be stably supplied.

In the present disclosure, a crystallized glass means a glass obtained by heating (firing) a precursor glass containing an amorphous phase to precipitate crystals (crystallize the precursor glass) . The amorphous phase may fully transition into a crystal phase or the amorphous phase may partially remain. Furthermore, a single kind of crystal may be precipitated or two or more kinds of crystals may be precipitated. For example, whether or not to be a crystallized glass can be determined by a peak angle shown by powder X-ray diffraction (XRD).

A sodium-ion secondary battery of Aspect 2 in the present invention is the sodium-ion secondary battery according to Aspect 1, wherein the hard carbon is preferably coated with a coating layer containing beta-alumina crystals or NASICON crystals. Hard carbon has excellent electronic conductivity. Therefore, in the event of a short circuit, most of the negative-electrode active material may abruptly react to concentrate electric current on a short-circuited portion, which makes it likely that a temperature increase occurs. For this reason, the hard carbon is coated with a coating layer containing a solid electrolyte, such as beta-alumina crystals or NASICON crystals. Thus, the electronic conductivity in the negative electrode is decreased while the ionic conductivity is maintained, and, therefore, electric current concentration can be suppressed. As a result, the temperature increase in the event of a short circuit can be suppressed and, thus, the safety can be further increased.

A sodium-ion secondary battery of Aspect 3 in the present invention is the sodium-ion secondary battery according to Aspect 1 or 2, wherein the positive-electrode active material is preferably made of a crystallized glass containing crystals represented by a general formula NaₓMP₂O₇ (where 1 ≤ x ≤ 2 and M is at least one selected from among Fe, Ni, Co, Mn, and Cr) .

A sodium-ion secondary battery of Aspect 4 in the present invention is the sodium-ion secondary battery according to Aspect 3, wherein the positive-electrode active material is preferably made of a crystallized glass containing crystals represented by a general formula NaₓFeP₂O₇ (where 1 ≤ x ≤ 2) .

A sodium-ion secondary battery of Aspect 5 in the present invention is the sodium-ion secondary battery according to any one of Aspects 1 to 4, wherein the positive-electrode active material is preferably coated with a carbon material. In the present disclosure, coating is a concept different from mixing; mixed powder is a simple set of a positive-electrode active material and a carbon material, whereas coated powder is powder in which a carbon material is present on the surfaces of positive-electrode active material particles forming the powder. For example, coating means that a positive-electrode active material particle forms a core and the periphery (surface) of the core is partially or fully coated with a carbon material.

A sodium-ion secondary battery of Aspect 6 in the present invention is the sodium-ion secondary battery according to any one of Aspects 1 to 5, wherein the positive-electrode active material is preferably formed of secondary particles. If a positive-electrode active material formed of primary particles is used to form a paste coating, the particle diameter of the positive-electrode active material is small and, therefore, the cohesion of the particles during drying of the paste coating is great, resulting in the tendency for the electrode to crack during the drying of the paste coating. If in this case the particle diameter of the primary particles is increased, the specific surface area decreases, which presents a problem of reduction in electronic conductivity and ionic conductivity. Unlike the above, a positive-electrode active material formed of secondary particles has a relatively large specific surface area and can be increased in particle diameter, which can suppress cracking of the electrode during drying of a paste coating and reduction in electronic conductivity and ionic conductivity described above.

In the present disclosure, a secondary particle means a particle in which primary particles having an average particle diameter of 50 nm or more gather together (agglomerate).

A sodium-ion secondary battery of Aspect 7 in the present invention is the sodium-ion secondary battery according to any one of Aspects 1 to 6, wherein the non-aqueous electrolyte preferably contains an organic electrolytic solution and/or a gel polymer electrolyte.

In an electrical device of Aspect 8 in the present invention, the sodium-ion secondary battery according to any one of Aspects 1 to 7 is used.

### [Advantageous Effects of Invention]

The present invention enables provision of a sodium-ion secondary battery having a high capacity and excellent safety.

### [Brief Description of Drawings]

[Fig. 1]

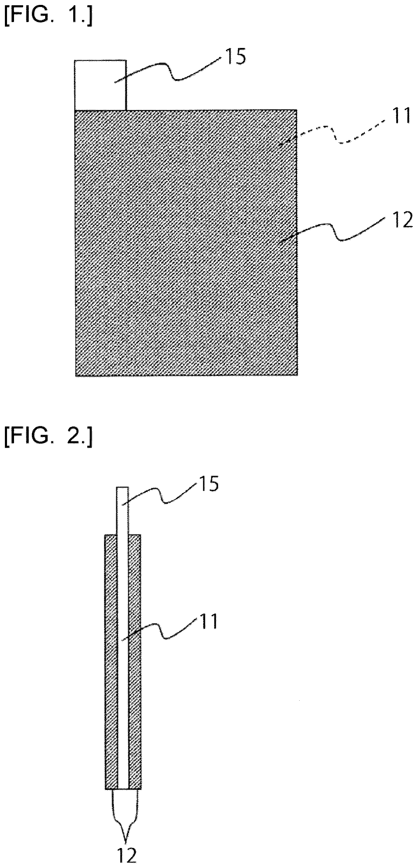

   Fig. 1 is a schematic plan view of a positive electrode produced in Example 1.
[Fig. 2]
   Fig. 2 is a schematic side view of the positive electrode produced in Example 1.
[Fig. 3]

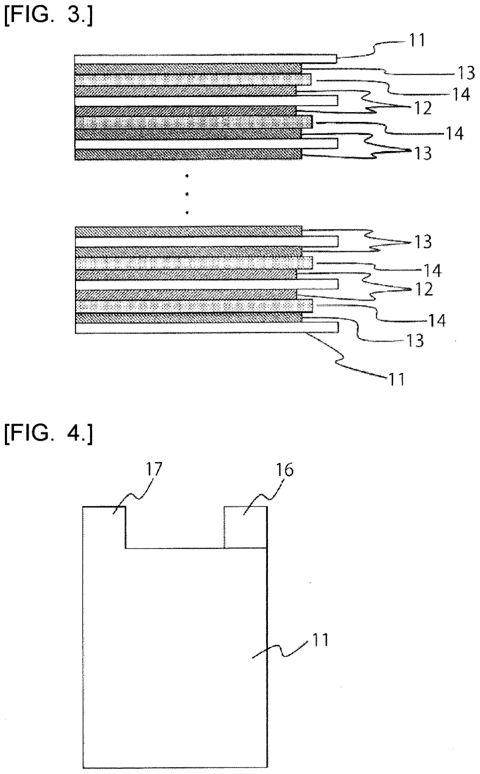

   Fig. 3 is a schematic cross-sectional view showing a laminate of negative electrodes, separators, and positive electrodes in a test cell of Example 1.
[Fig. 4]
   Fig. 4 is a schematic plan view showing the laminate of negative electrodes, separators, and positive electrodes in the test cell of Example 1.
[Fig. 5]

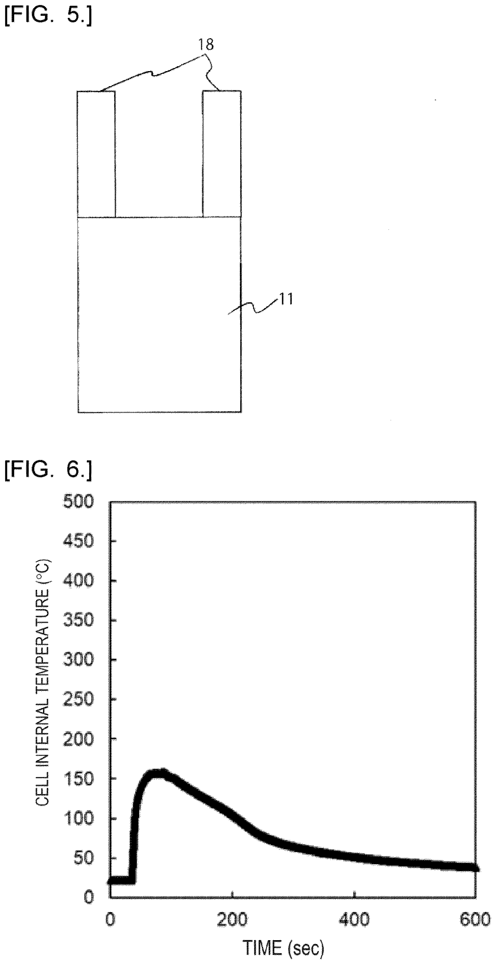

   Fig. 5 is a schematic plan view showing a state where an aluminum ribbon is welded to each of a set of tabs of the positive electrodes and a set of tabs of the negative electrodes in the test cell of Example 1.
[Fig. 6]
   Fig. 6 is a graph showing temperature changes when the test cell of Example 1 underwent a nail penetration test.
[Fig. 7]

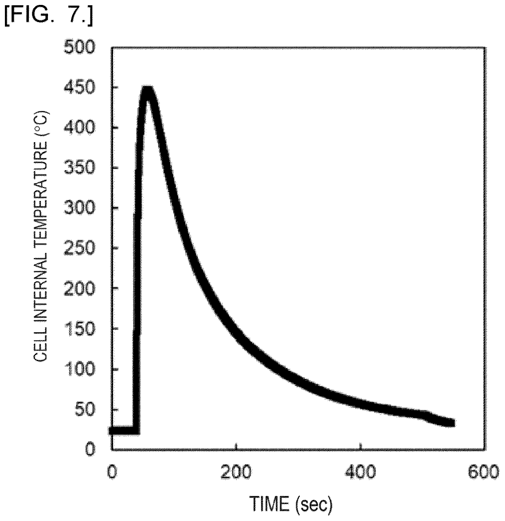

   Fig. 7 is a graph showing temperature changes when a test cell of Comparative Example 1 underwent a nail penetration test.

### [Description of Embodiments]

A sodium-ion secondary battery according to the present invention at least includes a positive electrode, a negative electrode, and a non-aqueous electrolyte. The non-aqueous electrolyte is present between the positive electrode and the negative electrode and serves to conduct sodium ions acting as a carrier between the positive electrode and the negative electrode. The positive electrode and/or the negative electrode is preferably impregnated with the non-aqueous electrolyte and, thus, the ionic conductivity of the positive electrode and/or the negative electrode can be increased. A separator having an insulation property is preferably provided between the positive electrode and the negative electrode in order to prevent the positive electrode and the negative electrode from making contact with each other and thus short-circuiting. For example, when the positive electrode and the negative electrode are layered through the separator and, in this state, the separator is impregnated with the non-aqueous electrolyte, an ionic conduction path between the positive electrode and the negative electrode can be formed while contact between the positive electrode and the negative electrode is prevented.

The sodium-ion secondary battery according to the present invention may include a single set of a positive electrode and a negative electrode or have a structure which includes a plurality of sets of a positive electrode and a negative electrode and in which these sets are layered, as shown in Examples below. When the battery has a structure in which a plurality of sets of a positive electrode and a negative electrode are layered, the battery can be increased in capacity.

Hereinafter, a detailed description will be given of respective embodiments of components of the sodium-ion secondary battery according to the present invention. However, the following embodiments are merely illustrative and the present invention is not intended to be limited to the following embodiments.

### (Positive Electrode)

The positive electrode in the present invention contains a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from among Fe, Ni, Co, Mn, and Cr).

In the above general formula, the number of sodium atoms, x, is preferably 1 to 2.8, more preferably 1.2 to 2.8, even more preferably 1.3 to 2.3, and particularly preferably 1.7 to 1.85. Within this range, an active material having high charge and discharge capacities can be obtained. Specifically, if x is too small, the number of sodium ions involved in absorption and release is small and, therefore, the charge and discharge capacities tend to decrease. On the other hand, if x is too large, heterogenous crystals, such as Na₃PO₄, not involved in charge and discharge are likely to precipitate and, therefore, the charge and discharge capacities tend to decrease.

In the above general formula, the number of M atoms, y, is preferably 0.95 to 1.6, more preferably 0.95 to 1.4, and particularly preferably 1.0 to 1.2. Within this range, an active material having high charge and discharge capacities can be obtained. Specifically, if y is too small, the number of transition metal ions causing a redox reaction is small, the number of sodium ions involved in absorption and release thus becomes small, and, therefore, the charge and discharge capacities tend to decrease. On the other hand, if y is too large, heterogenous crystals, such as NaFePO₄, not involved in charge and discharge are likely to precipitate and, therefore, the charge and discharge capacities tend to decrease.

P₂O_{z} forms a three-dimensional network and has a function to stabilize the structure of the positive-electrode active material. The number of oxygen atoms, z, is preferably 6.5 to 8, more preferably 7 to 7.8, even more preferably 7 to 7.5, and particularly preferably 7 to 7.3. Within this range, an active material having a long life and a high capacity can be obtained. Specifically, if z is too small, the valence of M becomes lower than bivalence and, thus, metal is likely to precipitate during charge and discharge. The precipitated metal may be eluted into the electrolyte to induce deterioration of the battery. On the other hand, if z is too large, the valence of M becomes higher than bivalence and, thus, a redox reaction associated with charge and discharge of the battery is less likely to occur. As a result, the number of sodium ions absorbed and released becomes small and, therefore, the charge and discharge capacities tend to decrease.

A specific example of the positive-electrode active material made of a crystallized glass containing crystals represented by a general formula NaₓM_{y}P₂O_{z} is a positive-electrode active material made of a crystallized glass containing crystals represented by a general formula NaₓMP₂O₇ (where 1 ≤ x ≤ 2 and M is at least one selected from among Fe, Ni, Co, Mn, and Cr) . Particularly, a crystallizable glass containing crystals represented by a general formula NaₓFeP₂O₇ (1 ≤ x ≤ 2) is preferred because it not only has a strong pyrophosphate backbone and therefore excellent safety without release of oxygen during overcharge, but also has excellent cycle characteristics. In addition, Fe is used as a transition metal element causing a redox reaction and the crystallized glass is free of rare metal, which is preferred from the viewpoint of resource. Furthermore, the glass precipitating the above crystals is stable in vitrification and, therefore, has the advantage of being easily producible. Particularly, Na₂Fe_{1.33}P₂O_{7.33} (= Na₃Fe₂(PO₄)P₂O₇) has a high capacity per unit mass and a high operating voltage and, therefore, enables production of a battery having a higher energy density.

The form of the positive-electrode active material made of a crystallized glass containing crystals represented by a general formula NaₓM_{y}P₂O_{z} is not particularly limited, but is preferably a powdered form. In this case, the average particle diameter of the positive-electrode active material is preferably 0.01 to 30 µm, more preferably 0.05 to 12 µm, and particularly preferably 0.1 to 10 µm. By passing the powder through a mesh with sub-50 µm openings, the powder can be adjusted to fall within the above range. Within this range, an electrode having excellent surface smoothness is easily producible and, therefore, a low-resistant battery can be obtained. Specifically, if the average particle diameter of the positive-electrode active material powder is too small, the cohesion between powder particles increases and, therefore, the powder tends to be poor in dispersibility when formed into a paste. In addition, the electrode tends to crack during drying of the paste coating. As a result, the internal resistance of the battery becomes high and the operating voltage is likely to decrease. Furthermore, the electrode density tends to decrease, thus decreasing the capacity per unit volume of the battery. On the other hand, if the average particle diameter of the positive-electrode active material powder is too large, sodium ions are less likely to diffuse and the internal resistance tends to increase. In addition, the surface smoothness of the electrode tends to be poor.

The positive-electrode active material is preferably formed of secondary particles. By doing so, as described previously, cracking of the electrode during drying of a paste coating and reduction in electronic conductivity and ionic conductivity can be suppressed. When the positive-electrode active material is formed of secondary particles, the average particle diameter of the secondary particles preferably satisfies the above-described preferred range of average particle diameters of the positive-electrode active material. The form of the positive-electrode secondary particles is not particularly limited. Specifically, the form of the particles may be any of powdered forms, including spherical, ellipsoidal, faceted, strip-shaped, fibrous, flaky, toroidal, and hollow particles.

The average particle diameter used herein means D₅₀ (a volume-based average particle diameter) and refers to a value measured by the laser diffraction/scattering method.

The positive-electrode active material made of a crystallized glass containing crystals represented by a general formula NaₓM_{y}P₂O_{z} can be produced by subjecting a raw material prepared to have a predetermined composition to melting, forming, and, if necessary, grinding to obtain a precursor glass and then heat-treating the precursor glass at a predetermined temperature to crystallize it.

The precursor glass preferably contains, in terms of % by mole of the following oxides, 25 to 55% Na₂O, 20 to 60% FeO+NiO+CoO+MnO+CrO, and 25 to 55% P₂O₅. The reasons why the composition is limited as just described will be described below.

Na₂O is a component constituting part of NaₓM_{y}P₂O_{z} crystals. The content of Na₂O is preferably 25 to 55% and particularly preferably 30 to 50%. If the content of Na₂O is too small or too large, NaₓM_{y}P₂O_{z} crystals are less likely to precipitate.

FeO, NiO, CoO, MnO, and CrO are also components constituting part of NaₓM_{y}P₂O_{z} crystals. The total content of FeO, NiO, CoO, MnO, and CrO is preferably 20 to 60% and particularly preferably 30 to 50%. If the content of these components is too small, NaₓM_{y}P₂O_{z} crystals are less likely to precipitate. If the content of these components is too large, NaₓM_{y}P₂O_{z} crystals are less likely to precipitate and undesirable crystals, such as FeO, NiO, CoO, MnO or CrO, are likely to precipitate. Particularly, in order to increase the cycle characteristics and rapid charge and discharge characteristics, FeO is preferably positively contained in the precursor glass. All of the above components may not necessarily be contained as essential components and one or some of the components may not be contained (i.e., the content of one or some of the components may be 0%). The preferred range of contents of each component of FeO, NiO, CoO, MnO, and CrO is preferably 0 to 60%, more preferably 10 to 60%, even more preferably 20 to 60%, and particularly preferably 30 to 50%.

P₂O₅ is also a component constituting part of NaₓM_{y}P₂O_{z} crystals. The content of P₂O₅ is preferably 25 to 55% and particularly preferably 30 to 50%. If the content of P₂O₅ is too small or too large, NaₓM_{y}P₂O_{z} crystals are less likely to precipitate.

The precursor glass may contain, in addition to the above components, Nb₂O₅, MgO, Al₂O₃, TiO₂, ZrO₂ or Sc₂O₃. These components become incorporated into NaₓM_{y}P₂O_{z} crystals to increase the electronic conductivity and, therefore, the rapid charge and discharge characteristics are likely to increase. The total content of these components is preferably 0 to 25% and particularly preferably 0.2 to 10%. If the content of these components is too large, heterogeneous crystals are generated and the amount of NaₓM_{y}P₂O_{z} crystals precipitated is likely to decrease.

Furthermore, the precursor glass may contain SiO₂, B₂O₃, GeO₂, Ga₂O₃, Sb₂O₃ or Bi₂O₃. These components increase the glass formation ability and, therefore, a homogeneous amorphous material is likely to be obtained. The total content of these components is preferably 0 to 25% and particularly preferably 0.2 to 10%. If the content of these components is too large, the amount of NaₓM_{y}P₂O_{z} crystals precipitated is likely to decrease.

The composition of the resultant crystallized glass is the same as that of the precursor glass and the description thereof will therefore be omitted.

### (Negative Electrode)

A negative-electrode active material made of hard carbon is preferably used in powdered form. In this case, the average particle diameter of the negative-electrode active material is preferably 0.1 to 30 µm, more preferably 0.5 to 15 µm, and particularly preferably 1 to 10 µm . Within this range, a battery having a high charge-discharge efficiency and a low resistance can be obtained. Specifically, if the average particle diameter of the negative-electrode active material is too small, the surface area of the active material is large and, therefore, the non-aqueous electrolyte tends to be likely to be reductively decomposed at the surface of the active material to form a coating. As a result, the initial charge-discharge efficiency of the battery becomes low. In addition, the formed coating tends to interfere with ion conduction and increase the internal resistance of the battery. On the other hand, if the average particle diameter of the negative-electrode active material powder is too large, the internal resistance tends to increase. In addition, the surface smoothness of the electrode tends to be poor.

Hard carbon can also be produced by firing a hard carbon precursor. Examples of the hard carbon precursor include: sugars, such as sucrose, cellulose, D-glucose, and fructose; biomass, such as lignin, cornstalk, sorghum stalk, pine cone, mangosteen, argan nut shell, chaff, dandelion, straw core, ramie fiber, cotton, kelp, and coconut meat skin; and polymers, such as PAN (polyacrylonitrile), pitch, PVC (polyvinyl chloride) nanofiber, polyaniline, sodium polyacrylate, tire (polymer for tire), and phosphorous-doped PAN.

The hard carbon is preferably coated with a coating layer containing beta-alumina crystals or NASICON crystals. By doing so, as described previously, the temperature increase in the event of a short circuit can be suppressed and, thus, the safety can be further increased.

Beta-alumina crystals include two types of crystals: β-alumina (theoretical composition formula: Na₂O·11Al₂O₃) and P"-alumina (theoretical composition formula: Na₂O·5.3Al₂O₃) . P"-alumina is a metastable material and is therefore generally used in a state in which Li₂O or MgO is added as a stabilizing agent thereto. P"-alumina has a higher sodium-ion conductivity than β-alumina. Therefore, β"-alumina alone or a mixture of β"-alumina and β-alumina is preferably used and Li₂O-stabilized β"-alumina (Na_{1.7}Li_{0.3}Al_{10.7}O₁₇) or MgO-stabilized β"-alumina ((Al_{10.32}Mg_{0.68}O₁₆) (Na_{1.68}O)) is more preferably used.

Examples of the NASICON crystals include compounds represented by a general formula Na₁₊ₓX₂P₃₋ₓSiₓO₁₂ (where X represents at least one transition metal element selected from group IV elements and 0 ≤ x ≤ 3). Particularly, the NASICON crystals preferably contain at least one of a first compound and a second compound both described below. The first compound is a compound represented by a general formula Na₁₊ₓZr₂P₃₋ₓSiₓO₁₂ (where 0 ≤ x ≤ 3). The second compound is a compound in which a part of Zr in the first compound is substituted with at least one element selected from the group consisting of Ca, Mg, Ba, Sr, Al, Nb, Ta, In, Ga, and group III elements. An example of the group III element is at least one selected from the group consisting of Sc, Y, and La.

Examples of the first compound and the second compound include Na₃Zr₂Si₂PO₁₂, Na₃Zr_{1.6}Ti_{0.4}Si₂PO₁₂, and Na₃Zr_{1.88}Y_{0.12}Si₂PO₁₂. Other examples of the NASICON crystals include Na_{3.2}Zr_{1.5}Si_{2.2}P_{0.7}O_{10.5}, Na₃Hf₂Si₂PO₁₂, Na_{5.4}Zr_{0.9}Hf_{1.4}Al_{0.6}Si_{1.2}P_{1.8}O₁₂, Na₃Zr_{1.3}Nb_{0.24}Si₂PO₁₂, Na_{3.6}Ti_{0.2}Y_{0.7}Si_{2.8}O₉, Na_{3.12}Zr_{1.88}Y_{0.12}Si₂PO₁₂, Na_{3.6}Zr_{0.15}Yb_{1.67}Si_{0.11}P_{2.9}O₁₂, and Na_{3.12}Zr_{1.88}Y_{0.12}Si₂PO₁₂.

Hard carbon coated with a coating layer containing beta-alumina crystals or NASICON crystal can be produced by mixing a precursor of the coating layer and hard carbon powder, drying the mixture, and then grinding it. Hereinafter, a description will be given of a precursor of the coating layer containing beta-alumina crystals or NASICON crystals. In the present disclosure, coating is a concept different from mixing; mixed powder is a simple set of beta-alumina crystals or NASICON crystals and hard carbon, whereas coated powder is powder in which beta-alumina crystals or NASICON crystals are present on the surfaces of hard carbon particles forming the powder. For example, coating means that a hard carbon particle forms a core and the periphery (surface) of the core is partially or fully coated with beta-alumina crystals or NASICON crystals.

The form of the hard carbon coated with a coating layer containing beta-alumina crystals or NASICON crystal is not particularly limited. Specifically, the form of the particles may be any of powdered forms, including spherical, ellipsoidal, faceted, strip-shaped, fibrous, flaky, toroidal, and hollow particles. Furthermore, the hard carbon particles preferably satisfy the above-described preferred range of average particle diameters of the negative-electrode active material.

For the coating layer containing beta-alumina crystals, the precursor of the coating layer can be obtained, for example, by mixing aluminum nitrate, sodium nitrate, and lithium nitrate. In doing so, the ratio among the above materials is adjusted to give a desired composition ratio of the beta-alumina crystals.

For the coating layer of NASICON crystals, an example of the precursor of the coating layer is a solution containing: an alkali metal element and a transition metal element both constituting part of the NASICON crystals; and carbonate ions. In the solution, the sodium metal element is contained as sodium ions and the transition metal element is contained as transition metal ions. The precursor of the coating layer may be formed, not as a solution, but as a gelled material or dried material of the solution.

The transition metal element is, for example, at least one element selected from the group consisting of group III elements and group IV elements. The transition metal element is preferably Ti, Zr, Hf, Sc, Y, La, Sm, Dy or Gd, more preferably Zr, Hf, Sc, Y, La, Sm, Dy or Gd, even more preferably Zr, Hf, Sc, Y, La or Sm, and particularly preferably Zr, Hf, Y, La or Sm. Other than these transition metal elements, the precursor of the coating layer may include at least one selected from the group consisting of Ca, Mg, Ba, Sr, Al, Nb, Ta, In, and Ga. In the precursor of the coating layer, carbonate ions may be contained as a carbonate (a carbonate of a transition metal) or a mixture of carbonate ions and a carbonate.

As the precursor of the coating layer, a solution containing nitrate ions instead of carbonate ions may be used. However, the precursor of the coating layer is preferably a solution containing carbonate ions for the following reasons.

When a solution containing nitrate ions is used as the precursor of the coating layer, there is a tendency that components in the solution heterogeneously precipitate during mixing or drying of the solution and, thus, a heterogeneous phase causing a decrease in ionic conductivity after firing is formed. Furthermore, the weight reduction due to decomposition of nitrate ions in the firing process is significant, which makes it difficult to form a homogeneous thin film layer. In addition, the production cost of facilities and so on for treating corrosive gas, such as NOₓ, generating in the firing process may increase. Furthermore, the solution containing nitrate ions is highly acidic and, therefore, requires high-level chemical durability of production facilities. Also in this respect, the production cost may increase.

On the other hand, when a solution containing carbonate ions is used as the precursor of the coating layer, a transition metal element in a transition metal oxide, such as ZrO₂ or Y₂O₃, normally dissolvable in an acidic region only is dissolved in the solution by being coordinated by carbonate ions to form a complex, which enables preparation of a metallic salt solution having neutrality to weak basicity (pH 7 or more, preferably 7.5 or more, more preferably 8 or more, even more preferably 8.5 or more, and particularly preferably 9 or more) . In this case, not only a sodium metal component constituting part of the coating layer can be dissolved as a carbonate or a hydroxide in the solution, but also a Si component constituting another part of the coating layer can be added as liquid glass (sodium silicate: Na₂O·nSiO₂). Therefore, a precursor of the coating layer can be easily prepared.

In the precursor solution of the coating layer, carbonate ions are preferably coordinated bidentately to the transition metal element. In this case, the transition metal element can be stably present in the solution.

The precursor solution of the coating layer preferably contains NR₄⁺ (where Rs are each independently a substituent of at least one selected from the group consisting of H, CH₃, C₂H₅, and CH₂CH₂OH) as counterions to the carbonate ions. By doing so, the transition metal element can be stably present in the solution.

The precursor solution of the coating layer can be obtained, for example, by mixing liquid glass (sodium silicate), sodium tripolyphosphate, and zirconium ammonium carbonate aqueous solution.

The coating layer may contain hard carbon. By doing so, the battery can be increased in capacity while being increased in electronic conductivity. The coating layer containing hard carbon can be produced, for example, by mixing the above-described hard carbon precursor into a precursor solution of the coating layer and firing the mixture.

### (Non-Aqueous Electrolyte)

Examples of the non-aqueous electrolyte include one containing an organic electrolytic solution and one containing a gel polymer electrolyte. Furthermore, when the non-aqueous electrolyte contains a sodium salt (a sodium supporting salt), it functions as an electrolyte for a sodium-ion secondary battery.

Examples of the organic electrolytic solution include propylene carbonate (PC), ethylene carbonate (EC), 1,2-dimethoxyethane (DME) γ-butyrolactone (GBL), tetrahydrofuran (THF), 2-methyltetrahydrofuran (2-MeTHF), 1,3-dioxolan, sulfolane, acetonitrile (AN), diethyl carbonate (DEC), dimethyl carbonate (DMC), methylethyl carbonate (MEC), and dipropyl carbonate (DPC). Alternatively, other examples include: ionic liquids of aliphatic quaternary ammonium salts, such as N,N,N-trimethyl-N-propyl ammonium bis(trifluoromethanesulfonyl)imide [abbr. TMPA-TFSI], N-methyl-N-propylpiperidinium bis(trifluoromethanesulfonyl)imide [abbr. PP13-TFSI], N-methyl-N-propylpyrrolidinium bis(trifluoromethanesulfonyl)imide [abbr. P13-TFSI], and N-methyl-N-butylpyrrolidinium bis(trifluoromethanesulfonyl)imide [abbr. P14-TFSI]; and ionic liquids of quaternary alkylimidazolium salts, such as 1-methyl-3-ethylimidazolium tetrafluoroborate [abbr. EMIBF₄], 1-methyl-3-ethylimidazolium bis(trifluoromethanesulfonyl)imide [abbr. EMITFSI], 1-allyl-3-ethylimidazolium bromide [abbr. AEImBr], 1-allyl-3-ethylimidazolium tetrafluoroborate [abbr. AEImBF₄], 1-allyl-3-ethylimidazolium bis (trifluoromethanesulfonyl) imide [abbr. AEImTFSI], 1,3-diallylimidazolium bromide [abbr. AAImBr], 1,3-diallylimidazolium tetrafluoroborate [abbr. AAImBF₄], and 1,3-diallylimidazolium bis(trifluoromethanesulfonyl)imide [abbr. AAImTFSI]. These non-aqueous solvents may be used singly or in a mixture of two or more of them.

Examples of the gel polymer electrolyte include polyacrylonitrile (PAN), polyethylene oxide (PEO), polypropylene oxide (PPO), polyethylene glycol (PEG), polyethylene imine (PEI), polymethyl methacrylic acid (PMMA), poly(vinylidene fluoride (VDF)-hexafluoropropylene (HFP)) copolymer (PVDF-HFP), and polymers of any combination of them. With the use of a non-aqueous electrolyte containing a gel polymer electrolyte, the electrolyte is less likely to catch fire and, therefore, the safety of the secondary battery can be further increased.

Examples of the sodium salt include sodium salts of PF₆⁻, BF₄⁻, (CF₃SO₂)₂N⁻ (bis(trifluoromethanesulfonyl) imide, commonly called TFSI), CF₃SO₃⁻ (commonly called TFS), (C₂F₅SO₂)₂N⁻(bis(pentafluoroethanesulfonyl)amide, commonly called BETI), ClO₄⁻, AsF₆⁻, SbF₆⁻, bis (oxalato) boric acid (B(C₂O₄)₂⁻, commonly called BOB), and difluoro(trifluoro-2-oxide-2-trifluoro-methyl propionate (2-)-0,0) boric acid (BF₂OCOOC(CF₃)₃⁻, commonly called B(HHIB)). These electrolyte salts may be used singly or in a mixture of two or more of them. Particularly, sodium salts of PF₆⁻ and BF₄⁻, which are inexpensive, are preferred. The electrolyte salt concentration is appropriately adjusted, generally, within a range of 0.5 to 3 M/L.

The non-aqueous electrolyte may contain an additive, such as vinylene carbonate (VC), vinylene acetate (VA), vinylene butyrate, vinylene hexanoate, vinylene crotonate or catechol carbonate. These additives serve to form a protective film on the surface of the active material. The concentration of the additive is, relative to 100 parts by mass of non-aqueous electrolyte, preferably 0.1 to 3 parts by mass and particularly preferably 0.5 to 1 part by mass.

### (Other Materials)

The positive electrode and the negative electrode may contain a conductive agent and/or a binder.

The conductive agent is a component that forms a conducting path in the positive electrode and the negative electrode. For example, a conductive carbon can be used as the conductive agent. Preferred examples of the conductive carbon include powdered or fibrous conductive carbons, including highly conductive carbon blacks, such as acetylene black or Ketj enblack.

The binder is a material for binding together the source material components (source material component powders) for the positive electrode and the negative electrode. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; and polyvinylidene fluoride.

A current collector layer is preferably provided on the outside surfaces of the positive electrode and/or the negative electrode. Thus, electrons generated by battery reaction can be collected and efficiently extracted to the outside. The current collector layer is made of, for example, a metal foil. Specifically, the material for the metal foil is at least one selected from among Al, Ti, Fe, Ni, Sn, Bi, Cu, Pb, Mo, Ag, and Au. Among these materials, Al is preferred because of its excellent electrical conductivity and light weight.

The thickness of the current collector layer is preferably 0.1 to 1000 µm, more preferably 0.1 to 500 µm, and particularly preferably 0.2 to 20 µm. Within this range, a battery having excellent output characteristics and a high energy density can be obtained. Specifically, if the current collector layer is too thin, the resistance becomes excessively high. If the current collector layer is too thick, the energy density per unit volume and energy density per unit weight of the sodium secondary battery tend to decrease.

The sodium-ion secondary battery according to the present disclosure has excellent safety and, therefore, can be used as a power source for various electrical devices, for example, an air conditioner, a washing machine, a TV set, a refrigerator, a freezer, a cooling apparatus, a notebook computer, a tablet computer, a smartphone, a PC keyboard, a PC display, a desktop PC, a CRT monitor, a PC rack, a printer, a 3D printer, an integrated PC, a mouse, a hard disk, PC peripherals, a clothes iron, a clothes drier, a window fan, a transceiver, a blower, a ventilating fan, a TV set, a music recorder, a music player, an oven, a range, a toilet seat with a warm-water shower feature, a convection space heater, car components, a car navigation device, a flashlight, a humidifier, a portable karaoke device, an extractor fan, a dryer, an air purifier, a mobile phone, an emergency light, a gaming device, a sphygmomanometer, a coffee mill, a coffee maker, a kotatsu, a copier, a disc changer, a radio, a shaver, a juicer, a shredder, a water purifier, a lighting fixture, a dehumidifier, a dish dryer, a rice cooker, a stereo, a stove, a speaker, a trouser press, a cleaner, a body fat scale, a weight scale, a bathroom scale, a video player, an electrically heated carpet, an electric rice cooker, a rice cooker, an electric razor, a desk lamp, an electric pot, an electronic gaming device, a portable gaming device, an electronic dictionary, an electronic organizer, a microwave, an electromagnetic cooker, a calculator, an electric cart, an electric wheelchair, power tools, an electric toothbrush, a footwarmer, a haircutting device, a telephone, a clock, an intercom, an air circulator, an insect electrocutor, a copying machine, a hot plate, a toaster, a hair dryer, an electric drill, a water heater, a panel heater, a grinder mill, a soldering iron, a video camera, a video disc recorder, a facsimile machine, a fan heater, a food processor, a bedding dryer, headphones, an electric pot, a heated floor mat, a microphone, a massage machine, a midget lamp, a mixer, a sewing machine, a rice-cake making machine, a floor heating panel, a lantern, a remote control, a chilling/heating cabinet, a water cooler, a freezer storage, an air cooler, a word processor, a whisk, a GPS, electronic music instruments, a motorcycle, toys, a lawn mower, a floater, an electric reel, an electric shocker for tuna fishing, an underwater scooter, a fish finder, a bicycle, a motorcycle, a motor vehicle, a hybrid motor vehicle, a plug-in hybrid motor vehicle, an electric vehicle, railroads, a ship, an airplane, a submarine, an aircraft, a satellite, and an emergency power supply system.

### [Examples]

Hereinafter, the present invention will be described in further detail with reference to examples, but the present invention is not at all limited to these examples.

Tables 1 and 2 show Examples 1 to 7 and Comparative Examples 1 to 3.

**[Table 1]**

| | **Ex. 1** | **Ex. 2** | **Ex. 3** | **Ex. 4** | **Comp.Ex.1** | **Comp.Ex.2** | **Comp.Ex.3** |
|---|---|---|---|---|---|---|---|
| **POSITIVE ELECTRODE** | Na₂FeP₂O₇ Crystallized glass | Na₂FeP₂O₇ Crystallized glass | Na₂FeP₂O₇ Crystallized glass | Na₂FeP₂O₇ Crystallized glass | NCA (LiNi_{0.8}Co_{0.15}At_{0.05}O) | NCM811 (LiNi_{0.8}Co_{0.1}Mn_{0.7}O₂) | LFP (LiFePO₄) |
| **ELECTROLYTE** | NaPF₆/EC:DEC | NaPF₆/EC:DEC | PAN+NaTFS /EC:DEC | PEO+NaTFSI /EC:DEC | LiPF₆/EC:DEC | LiPF₆/EC:DEC | LiPF₆/EC:DEC |
| **NEGATIVE ELECTRODE** | Hard carbon | Hard carbon (NASICON-coated) | Hard carbon (NASICON-coated) | Hard carbon (NASICON-coated) | Graphite | Graphite | Graphite |
| **CHARGE CAPACITY** (mAh) | 500 | 550 | 550 | 530 | 550 | 600 | 580 |
| **INTERNAL TEMPERATURE** (°C) | 150 | 75 | 55 | 60 | 460 | 550 | 210 |
| **PRESENCE OF FLAME** | No smoke or flame emitted | No smoke or flame emitted | No smoke or flame emitted | No smoke or flame emitted | Flame emitted | Flame emitted | Smoke emitted |

**[Table 2]**

| | **Ex. 5** | **Ex. 6** | **Ex. 7** |
|---|---|---|---|
| **POSITIVE ELECTRODE** | Na₃Fe₂(PO₄)P₂O₇ Crystallized glass | Na₃Fe₂(PO₄)P₂O₇ Crystallized glass | Na₃Fe₂(PO₄)P₂O₇ Crystallized glass |
| **ELECTROLYTE** | NaPF₆/EC:DEC | NaPF₆/EC:DEC | PEO+NaTFSI /EC:DEC |
| **NEGATIVE ELECTRODE** | Hard carbon | Hard carbon (NASICON-coated) | Hard carbon (NASICON-coated) |
| **CHARGE CAPACITY (mAh)** | 470 | 600 | 510 |
| **INTERNAL TEMPERATURE** (°C) | 140 | 80 | 60 |
| **PRESENCE OF FLAME** | No smoke or flame emitted | No smoke or flame emitted | No smoke or flame emitted |

### (Example 1)

### (a) Production of Positive Electrode

A raw material prepared to provide, in terms of molar ratio, 40Na₂O-20Fe₂O₃-40P₂O₅ as a glass composition was melt at 1200°C for an hour in the atmosphere and cooled by twin rollers, thus producing a glass film. The obtained glass film was ground for 60 hours in a ball mill using a mixture of 5-mm diameter ZrO₂ balls, 3-mm diameter ZrO₂ balls, and 1-mm diameter ZrO₂ balls in ethanol, thus obtaining a glass powder having a specific surface area of 11.1 m²/g. The obtained glass powder was further ground for five hours in a planetary ball mill at 300 rpm using 0.3-mm diameter ZrO₂ balls in ethanol, thus obtaining a glass powder having a specific surface area of 32.1 m²/g.

An amount of 25 parts by mass of polyethylene oxide nonylphenyl ether (HLB value: 13.3, mass average molecular weight: 660), which is a non-ionic surfactant, was added as a carbon source to 100 parts by mass of the obtained glass powder, and these materials were mixed with a planetary centrifugal mixer and then dried. The obtained powder was fired in a nitrogen atmosphere at 620°C for 30 minutes, thus obtaining a positive-electrode active material powder made of a crystallized glass containing Na₂FeP₂O₇ crystals surface-coated with carbon.

The obtained positive-electrode active material powder was ground in an alumina mortar and then passed through a mesh with 50 µm openings. An amount of 5 parts by mass of acetylene black as a conductive agent was added to 95 parts by mass of the obtained powder, thus obtaining a positive electrode composite material powder. An amount of 5 parts by mass of polyvinylidene fluoride was further added to the powder and N-methyl-2-pyrrolidone was further added as a solvent to the powder to give the positive electrode composite material powder a concentration of 50% by mass. These materials were mixed with a planetary centrifugal mixer, thus producing a positive-electrode paste.

The produced positive-electrode paste was coated, using a doctor blade, on both surfaces of a current collector layer 11 made of a 20 µm thick aluminum foil to provide a capacity of 2.5 mAh/cm² for each surface. Thereafter, the current collector layer 11 was dried for an hour by a dryer at 80°C and pressed by a roll press, thus forming a positive electrode layer 12. Using a Thomson blade, the obtained laminate was punched into ten pieces with a 55 mm × 40 mm portion where the positive electrode layer was formed and a 10 mm × 10 mm tab 15 where the positive electrode layer 12 was not formed (see Figs. 1 and 2) . In this manner, positive electrodes were produced.

### (b) Production of Negative Electrode

An amount of 5 parts by mass of acetylene black as a conductive agent was added to 95 parts by mass of hard carbon powder having an average particle diameter of 5 µm, thus obtaining a negative electrode composite material powder. An amount of 5 parts by mass of polyvinylidene fluoride was further added to the powder and N-methyl-2-pyrrolidone was further added as a solvent to the powder to give the negative electrode composite material powder a concentration of 50% by mass. These materials were mixed with a planetary centrifugal mixer, thus producing a negative-electrode paste.

The produced negative-electrode paste was coated, using a doctor blade, on both surfaces of a 20 µm thick aluminum current collector foil to provide a capacity of 2.5 mAh/cm² for each surface. Thereafter, the current collector foil was dried for an hour by a dryer at 80°C and pressed by a roll press, thus forming a negative electrode layer. Using a Thomson blade, the obtained laminate was punched into nine pieces with a 60 mm × 45 mm portion where the negative electrode layer was formed and a 10 mm × 10 mm aluminum tab where the negative electrode layer was not formed. In this manner, negative electrodes were produced. Aside from this, two negative electrodes where a negative electrode layer was formed on only one surface were produced.

### (c) Production of Separator

Using a Thomson blade, a 16 µm thick polyolefin-based porous film (a polypropylene microporous film both surfaces of which were coated with alumina) was punched into ten separators each having a size of 65 mm × 50 mm.

### (d) Production of Test Cell

The negative electrodes, the separators, and the positive electrodes obtained as described above were layered one by one in this order within an aluminum laminate film drawn to a size of 65 mm × 50 mm. Specifically, as shown in Fig. 3, ten units of a negative electrode (a negative electrode layer 13), a separator 14, and a positive electrode (a positive electrode layer 12) were layered and a negative electrode where a negative electrode layer 13 was formed on only one surface was located at each of both the outermost surfaces of the laminate. In the layering, as shown in Fig. 4, aluminum tabs were provided to project from different positions between the positive electrodes and the negative electrodes (see the tab (positive electrode) 16 and the tab (negative electrode) 17 in Fig. 4). After the layering, the set of aluminum tabs of positive electrodes and the set of aluminum tabs of negative electrodes were put together for each set and each set of aluminum tabs was welded with a 10 mm wide and 0.1 mm thick aluminum ribbon by a resistance welder, thus forming terminals (aluminum ribbons (terminals) 18) (see Fig. 5) . Thereafter, three sides of the aluminum laminate film were heat-sealed, 6 g of 1 M/L NaPF₆ solution/EC:DEC = 1:1 (an electrolytic solution in which NaPF₆ was dissolved at a concentration of 1 M/L into a solvent of a mixture of ethylene carbonate and diethyl carbonate at a volume ratio of 1:1) was added as an electrolyte into the aluminum laminate film, and the aluminum laminate film was vacuum-sealed, thus producing a test cell.

### (e) Charge Test

A cell capacity was calculated from the mass of the supported positive-electrode active material with reference to a theoretical capacity of 96 mAh/g and, based on the calculated cell capacity, the test cell was constant-current charged at a current value set to give a C-rate of 0.05 (charge and discharge for 20 hours) in a thermostat bath at 30°C. The cut-off voltage was 4.2 V. The charge capacity is shown in Table 1. As seen from Table 1, all the cells show comparative charge capacities.

### (f) Nail Penetration Test

A 3 mm diameter soft steel nail with a type K thermocouple inside was driven, at a rate of 1 mm/sec, into the laminate cell in a fully charged state until it penetrated through the cell. Temperature changes in the inside of the cell after the nail was driven into the cell were measured with the thermocouple. The peak temperature (internal temperature) in the inside of the cell is shown in Table 1. Furthermore, a graph of the temperature changes in the inside of the cell is shown in Fig. 6. An evaluation was made also in terms of whether or not flame or smoke emission was observed on the cell within five minutes after the nail was driven into the cell.

### (Example 2)

A test cell was produced in the same manner as in Example 1 except that a negative-electrode paste was obtained in the following manner.

Liquid glass (sodium silicate: Na₂O·nSiO₂), a zirconium ammonium carbonate aqueous solution ((NH₄)₂Zr(OH)₂(CO₃)₂), and sodium tripolyphosphate (Na₅P₃O₁₀) were weighed 25 g in total to provide NASICON crystals having a composition of Na₃Zr₂Si₂PO₁₂. These materials were added to 150 g of pure water, followed by stirring with a hot stirrer at 50°C for 24 hours. Thus, an alkali-ion conductive solid electrolyte precursor solution (pH = 9.7) was obtained. Next, this solution was allowed to stand overnight in a thermostat bath at approximately 5°C, thus turning it into a gel. In this manner, an alkali-ion conductive solid electrolyte precursor was prepared.

Sucrose serving as a hard carbon source and the alkali-ion conductive solid electrolyte precursor obtained in the above manner were mixed for an hour in a stirrer to give a mass ratio of 4:1, thus obtaining a mixed liquid.

An amount of 40 parts by mass of mixed liquid obtained as described above was added to 100 parts by mass of hard carbon powder having an average particle diameter of 5 µm, followed by mixing with a planetary centrifugal mixer. This mixture was dried and then ground. The obtained powder was put into a carbon crucible and fired at 1000°C in a nitrogen atmosphere in a quartz tubular furnace. From the difference between the powdered mass of the secondary particles after the firing and the mass of hard carbon powder before the firing, the amount of the coating layer was determined to be 11 parts by mass relative to 100 parts by mass of hard carbon powder. An amount of 5 parts by mass of acetylene black as a conductive agent was added to 95 parts by mass of the coated hard carbon powder, thus obtaining a negative electrode composite material powder. An amount of 5 parts by mass of polyvinylidene fluoride was further added to the powder and N-methyl-2-pyrrolidone was further added as a solvent to the powder to give the negative electrode composite material powder a concentration of 50% by mass. These materials were mixed with a planetary centrifugal mixer, thus producing a negative-electrode paste.

A test cell thus produced underwent the charge/discharge test and the nail penetration test in the same manner as in Example 1. The results are shown in Table 1.

### (Example 3)

A test cell was produced in the same manner as in Example 2 except that a gel polymer produced in the following manner was used instead of an electrolytic solution.

PAN (polyacrylonitrile, an average molecular weight of 150000) and NaCF₃SO₃ (sodium trifluoromethanesulfonate, abbr. NaTFS) serving as a supporting salt were mixed to give a mass ratio of 7: 3. An amount of 90 parts by mass of EC: DEC = 1: 1 solvent (a solvent of a mixture of ethylene carbonate and diethyl carbonate at a volume ratio of 1:1) was added to 10 parts by mass of mixture obtained as above, thus obtaining a gel polymer.

A test cell thus produced underwent the charge/discharge test and the nail penetration test in the same manner as in Example 1. The results are shown in Table 1.

### (Example 4)

A test cell was produced in the same manner as in Example 2 except that a gel polymer produced in the following manner was used instead of an electrolytic solution.

PEO (polyethylene oxide, an average molecular weight of 60000) and (CF₃SO₂)₂NNa (sodium bis(trifluoromethanesulfonyl)imide, abbr. NaTFSI) serving as a supporting salt were mixed to give a mass ratio of 8:2. An amount of 90 parts by mass of EC:DEC = 1: 1 solvent was added to 10 parts by mass of mixture obtained as above, thus obtaining a gel polymer.

A test cell thus produced underwent the charge/discharge test and the nail penetration test in the same manner as in Example 1. The results are shown in Table 1.

### (Example 5)

A test cell was produced in the same manner as in Example 1 except that a positive-electrode active material powder was produced in the following manner in the process for producing a positive electrode.

A raw material prepared to provide, in terms of molar ratio, 37.5Na₂O-25Fe₂O₃-37.5P₂O₅ as a glass composition was melt at 1200°C for an hour in the atmosphere and cooled by twin rollers, thus producing a glass film. The obtained glass film was ground for 60 hours in a ball mill using a mixture of 5-mm diameter ZrO₂ balls, 3-mm diameter ZrO₂ balls, and 1-mm diameter ZrO₂ balls in ethanol, thus obtaining a glass powder having a specific surface area of 11.1 m²/g. The obtained glass powder was further ground for five hours in a planetary ball mill at 300 rpm using 0.3-mm diameter ZrO₂ balls in ethanol, thus obtaining a glass powder having a specific surface area of 29.4 m²/g.

An amount of 25 parts by mass of polyethylene oxide nonylphenyl ether (HLB value: 13.3, mass average molecular weight: 660), which is a non-ionic surfactant, was added as a carbon source to 100 parts by mass of the obtained glass powder, and these materials were mixed with a planetary centrifugal mixer and then dried. The obtained powder was fired in a nitrogen atmosphere at 620°C for 30 minutes, thus obtaining a positive-electrode active material powder made of a crystallized glass containing Na₃Fe₂(PO₄)P₂O₇ (= Na₂Fe_{1.33}P₂O_{7.33}) crystals surface-coated with carbon.

A test cell thus produced underwent the charge/discharge test and the nail penetration test in the same manner as in Example 1. The results are shown in Table 2.

### (Example 6)

A test cell was produced in the same manner as in Example 5 except that a negative-electrode paste was obtained in the following manner.

Liquid glass (sodium silicate: Na₂O·nSiO₂), a zirconium ammonium carbonate aqueous solution ((NH₄)₂Zr(OH)₂(CO₃)₂), and sodium tripolyphosphate (Na₅P₃O₁₀) were weighed 25 g in total to provide NASICON crystals having a composition of Na₃Zr₂Si₂PO₁₂. These materials were added to 150 g of pure water, followed by stirring with a hot stirrer at 50°C for 24 hours. Thus, an alkali-ion conductive solid electrolyte precursor solution (pH = 9.7) was obtained. Next, this solution was allowed to stand overnight in a thermostat bath at approximately 5°C, thus turning it into a gel. In this manner, an alkali-ion conductive solid electrolyte precursor was prepared.

Sucrose serving as a hard carbon source and the alkali-ion conductive solid electrolyte precursor obtained in the above manner were mixed for an hour in a stirrer to give a mass ratio of 4:1, thus obtaining a mixed liquid.

An amount of 40 parts by mass of mixed liquid obtained as described above was added to 100 parts by mass of hard carbon powder having an average particle diameter of 5 µm, followed by mixing with a planetary centrifugal mixer. This mixture was dried and then ground. The obtained powder was put into a carbon crucible and fired at 1000°C in a nitrogen atmosphere in a quartz tubular furnace. From the difference between the powdered mass of the secondary particles after the firing and the mass of hard carbon powder before the firing, the amount of the coating layer was determined to be 11 parts by mass relative to 100 parts by mass of hard carbon powder. An amount of 5 parts by mass of acetylene black as a conductive agent was added to 95 parts by mass of the coated hard carbon powder, thus obtaining a negative electrode composite material powder. An amount of 5 parts by mass of polyvinylidene fluoride was further added to the powder and N-methyl-2-pyrrolidone was further added as a solvent to the powder to give the negative electrode composite material powder a concentration of 50% by mass. These materials were mixed with a planetary centrifugal mixer, thus producing a negative-electrode paste.

A test cell thus produced underwent the charge/discharge test and the nail penetration test in the same manner as in Example 1. The results are shown in Table 2.

### (Example 7)

A test cell was produced in the same manner as in Example 6 except that a gel polymer produced in the following manner was used instead of an electrolytic solution.

PEO (polyethylene oxide, an average molecular weight of 60000) and (CF₃SO₂)₂NNa (sodium bis ( trifluoromethanesulfonyl)imide, abbr. NaTFSI) serving as a supporting salt were mixed to give a mass ratio of 8:2. An amount of 90 parts by mass of EC: DEC = 1: 1 solvent was added to 10 parts by mass of mixture obtained as above, thus obtaining a gel polymer.

A test cell thus produced underwent the charge/discharge test and the nail penetration test in the same manner as in Example 1. The results are shown in Table 2.

### (Comparative Example 1)

A test cell was produced in the same manner as in Example 1 except that NCA (LiNi_{0.8}Co_{0.15}Al_{0.05}O) having an average particle diameter of 15 µm was used as a positive-electrode active material, graphite having an average particle diameter of 10 µm was used as a negative-electrode active material, and 1 M/L LiPF₆ solution/EC:DEC = 1:1 (an electrolytic solution in which LiPF₆ was dissolved at a concentration of 1 M/L into a solvent of a mixture of ethylene carbonate and diethyl carbonate at a volume ratio of 1:1) was used as an electrolyte.

A test cell thus produced underwent the charge/discharge test and the nail penetration test in the same manner as in Example 1. The results are shown in Table 1. Furthermore, a graph of temperature changes in the inside of the cell is shown in Fig. 7.

### (Comparative Example 2)

A test cell was produced in the same manner as in Comparative Example 1 except that NCM811 (LiNi_{0.8}Co_{0.1}Mn_{0.1}O₂) having an average particle diameter of 10 µm was used as a positive-electrode active material and the test cell underwent the charge/discharge test and the nail penetration test in the same manner as in Example 1. The results are shown in Table 1.

### (Comparative Example 3)

A test cell was produced in the same manner as in Comparative Example 1 except that carbon-coated LFP (LiFePO₄) having an average secondary particle diameter of 10 µm was used as a positive-electrode active material and the test cell underwent the charge/discharge test and the nail penetration test in the same manner as in Example 1. The results are shown in Table 1.

As shown in Tables 1 and 2, although all the test cells showed comparative charge capacities, the test cells of Examples 1 to 7 exhibited an internal temperature as low as 150°C or lower on the nail penetration test and emitted no smoke or flame. Particularly, in Examples 2 to 4, 6, and 7 where hard carbon coated with a coating layer containing NASICON crystals was used as a negative-electrode active material, the internal temperature was as low as 80°C or lower. Furthermore, in Examples 3, 4, and 7 where a gel polymer was used as an electrolyte, the internal temperature was an even lower value of 60°C or lower.

On the other hand, in Comparative Examples 1 to 3, an internal temperature as high as 210°C or higher was exhibited on the nail penetration test and smoke or flame was emitted.

### [Reference Signs List]

- 11: current collector layer
- 12: positive electrode layer
- 13: negative electrode layer
- 14: separator
- 15: tab
- 16: tab (positive electrode)
- 17: tab (negative electrode)
- 18: aluminum ribbon (terminal)

## Claims

1. A sodium-ion secondary battery comprising:
a positive electrode containing a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from among Fe, Ni, Co, Mn, and Cr);
a negative electrode containing a negative-electrode active material made of hard carbon; and
a non-aqueous electrolyte.

2. The sodium-ion secondary battery according to claim 1, wherein the hard carbon is coated with a coating layer containing beta-alumina crystals or NASICON crystals.

3. The sodium-ion secondary battery according to claim 1 or 2, wherein the positive-electrode active material is made of a crystallized glass containing crystals represented by a general formula NaₓMP₂O₇ (where 1 ≤ x ≤ 2 and M is at least one selected from among Fe, Ni, Co, Mn, and Cr).

4. The sodium-ion secondary battery according to claim 3, wherein the positive-electrode active material is made of a crystallized glass containing crystals represented by a general formula NaₓFeP₂O₇ (where 1 ≤ x ≤ 2) .

5. The sodium-ion secondary battery according to claim 1 or 2, wherein the positive-electrode active material is coated with a carbon material.

6. The sodium-ion secondary battery according to claim 1 or 2, wherein the positive-electrode active material is formed of secondary particles.

7. The sodium-ion secondary battery according to claim 1 or 2, wherein the non-aqueous electrolyte contains an organic electrolytic solution and/or a gel polymer electrolyte.

8. An electrical device in which the sodium-ion secondary battery according to claim 1 or 2 is used.
